# EUROPEAN PATENT APPLICATION

(11) **EP 1 092 748 A1**
(43) Date of publication of application: **18.04.2001**
(21) Application number: 99250363.1
(22) Date of filing: 15.10.1999
(51) Int. Cl.: C08K 5/02, C08K 5/03, C08K 5/06, C08K 5/58, C08K 3/34

(54) **Stabilized flame retardant additives and their use**

(71) Applicant: ALBEMARLE CORPORATION, Baton Rouge, LA 70801-1765 (US)
(72) Inventor: De Schryver, Daniel A., 2820 Bonheiden (BE)
(74) Representative: UEXKÜLL & STOLBERG

(57) **Abstract**

Flame retardant additive compositions having enhanced thermal stability are described. They comprise a blend formed from (A) at least one organic bromine flame retardant selected from (i) a flame retardant compound having a plurality of bromine atoms directly bonded to a cycloaliphatic ring, (ii) the bis(2,3-dibromopropyl ether) of tetrabromobisphenol-A, and (iii) the bis(2,3-dibromopropyl ether) of tetrabromobisphenol-S, (B) an alkyltin mercaptoalkanoate, and (C) a zeolite adjuvant. The proportions are 0.01-0.08 part by weight of (B) per part by weight of (A), and 0.01-0.35 part by weight of (C) per part by weight of (A). Thermoplastic polymer compositions in which these additive compositions are employed possess enhanced properties.

## Description

A need thus exists for a way of increasing on a highly cost-effective basis the thermal stability of certain organic bromine flame retardants, such as those having a plurality of bromine atoms directly bonded to a cycloaliphatic ring, and bromine-containing dialkylethers of certain bisphenols.

For example, hexabromocyclododecane is an important commercially used flame retardant. Among its major uses are as a flame retardant in injected molded styrenic polymers, and as a flame retardant for use in expanded (foamed) styrenic polymer compositions. Unfortunately, hexabromocyclododecane does not have desirable thermal stability characteristics. Thus over the years considerable efforts have been devoted to finding ways of increasing the thermal stability of hexabromocyclododecane. While some progress has been made in this regard, there remains a need for a more effective way of thermal stabilizing hexabromocyclododecane.

Accomplishment of this task has proven to be difficult. In the first place, it would be of considerable advantage to be able to provide hexabromocyclododecane formulations that can be used as a flame retardant additive for both injection molded styrenic polymers and expanded or expandable styrenic polymers. In the former application prime requirements are the ability to achieve increased thermal stability, a UL V2 rating, and the ability to pass the Glow Wire test in HIPS compositions. For use in expanded or expandable styrenic polymer usage, adequate flame retardancy, increased thermal stability, and avoidance of surface roughness or surface defects are among prime requirements. Other properties desired in the case of flame retarded styrenic polymer compositions include lack of plasticizing effect on the substrate polymer, minimization of lump formation in the additive formulation during shipment and storage, and increased overall cost-effectiveness.

In the case of bromoalkyl ether flame retardants such as the bis(2,3-dibromopropyl ether) of tetrabromobisphenol-A, and the bis(2,3-dibromopropyl ether) of tetrabromobisphenol-S, the properties desired are good flame retardancy performance in olefin polymers, especially polypropylene, better thermal stability during the elevated temperatures encountered during polypropylene processing, and improved overall cost-effectiveness in the achievement of these advantageous properties.

Because of the various requirements that must be satisfied in order to achieve success in the marketplace, the discovery of a way of meeting these requirements has not been a simple task. The approaches taken are necessarily empirical. No obvious approach presented itself.

This invention has made it possible to provide compositions in which the thermal stability of flame retardants having a plurality of bromine atoms directly bonded to a cycloaliphatic ring is substantially increased. In addition, this invention makes it possible to provide molded flame retarded high-impact polystyrene specimens of 1.6 and 3.2 millimeter thickness (a) that can pass the IEC 695-2-1/2 Glow Wire test at least at one temperature in the range of 750°C to 960°C, or (b) that can pass the UL94 V2 test, or (c) that can pass both (a) and (b). This invention also enables the provision of a stabilized organic bromine-containing flame retardant composition that can be used interchangeably with high-impact styrenic polymers and with expanded or expandable styrenic polymers, that is free of plasticizing effects, and that imparts good surface characteristics, especially to the expanded or expandable styrenic polymers. Also made possible by this invention is a way of inhibiting the thermal degradation of bromine-containing dialkylethers of bisphenols, especially during processing of polypropylene at elevated temperatures. Moreover these various enhanced properties can be achieved without use of antimony oxide (deemed undesirable in the art because of potential toxicological considerations) or fumed silica (which is undesirable as it contributes to lump formation of additive formulations during handling, storage and processing). And the foregoing advantageous results can be achieved in a highly cost-effective manner.

Pursuant to one of its embodiments, this invention provides a flame retardant additive composition having enhanced thermal stability which comprises a blend formed from (A) at least one thermally sensitive organic bromine flame retardant selected from (i) a flame retardant compound having a plurality of bromine atoms directly bonded to a cycloaliphatic ring, (ii) the bis(2,3-dibromopropyl ether) of tetrabromobisphenol-A, and (iii) the bis(2,3-dibromopropyl ether of tetrabromobisphenol-S, (B) an alkyltin mercaptoalkanoate, and (C) a zeolite adjuvant, in proportions of 0.01 to 0.08 part by weight of (B) and 0.01 to 0.35 part by weight of (C) per part by weight of (A). Preferred proportions are 0.01 to 0.05 part by weight of (B) and 0.01 to 0.2 part by weight of (C) per part by weight of (A).

Preferred compositions of this invention are composed of a blend of (A) hexabromocyclododecane, (B) an alkyltin mercaptopropionate that is a solid at room temperature, and (C) a finely-divided zeolite in proportions of 0.01-0.05 part by weight of (B), and 0.01-0.20 part by weight of (C), per part by weight of (A).

Another embodiment of this invention is a composition comprising a vinylaromatic polymer, preferably high-impact polystyrene, with which has been blended a flame retardant quantity of a flame retardant additive composition of the above components (A), (B), and (C), especially where (A) is a compound having a plurality of bromine atoms directly bonded to a cycloaliphatic ring. In formulating such blends components (A), (B), and (C) can be blended with the vinylaromatic polymer individually and/or in any sub-combination(s) or partial blend(s) of any two or more of such components. However in order to minimize the possibility of blending errors or lack of substantial uniformity from formulation to formulation, and to facility the preparation of such formulations, it is preferable to mix with the vinylaromatic polymer a preformed blend of components (A), (B), and (C) in which the components are already in the requisite proportions.

Preferred high-impact polystyrene compositions of this invention have the capability of forming molded specimens of 1.6 and 3.2 millimeter thickness (a) that pass the IEC 695-2-1/2 Glow Wire test at least at one temperature in the range of 750°C to 960°C, or (b) that pass the UL94 V2 test. Particularly preferred high-impact polystyrene compositions of this invention have the capability of forming molded specimens of 1.6 and 3.2 millimeter thickness that satisfy the requirements of both of (a) and (b). The most preferred high-impact polystyrene compositions have the capability of forming molded specimens of 1.6 and 3.2 millimeter thickness that pass the foregoing Glow Wire Test at 960°C and that pass the UL94 V2 test.

Also provided by this invention are molded or extruded articles formed from any of the vinylaromatic compositions of this invention. Yet another aspect of this invention is a method of producing a flame-retarded vinylaromatic polymer article which comprises molding or extruding at a temperature of up to 250°C, a melt blend of a vinylaromatic composition of this invention.

Another embodiment of this invention is a composition comprising a polyolefin polymer, most preferably a polypropylene polymer, with which has been blended a flame retardant quantity of a flame retardant additive composition of the above components (A), (B), and (C), especially where (A) is the bis(2,3-dibromopropyl ether) of tetrabromobisphenol-A, or the bis(2,3-dibromopropyl ether) of tetrabromobisphenol-S. A flame retardant synergist, such as antimony trioxide, should also be included in such compositions, especially where the polyolefin polymer is polypropylene, to ensure that a UL94 V2 rating is achieved for the blend. In formulating such blends components (A), (B), and (C), and the synergist, can be blended with the polymer individually and/or in any sub-combination(s) or partial blend(s) of any two or more of such components. However in order to minimize the possibility of blending errors or lack of substantial uniformity from formulation to formulation, and to facility the preparation of such formulations, it is preferable to mix with the polyolefin polymer a preformed blend of at least components (A), (B), and (C) in which the components are already in the requisite proportions.

Other embodiments, features and aspects of this invention will be still further apparent from the ensuing description and appended claims.

The preferred organic bromine flame retardants used in the practice of this invention have a plurality of bromine atoms directly bonded to a cycloaliphatic ring. Pursuant to this invention the usefulness of such flame retardants in such thermoplastic polymers as expandable polystyrene, foamed polystyrene, crystal polystyrene, SAN resins, and especially high-impact polystyrene, is enhanced by virtue of the increased thermal stability made possible by the use therewith of a combination of the alkyltin mercaptoalkanoate and zeolite components. Nonlimiting examples of such flame retardants include pentabromocyclohexane, pentabromochlorocyclohexane, hexabromocyclohexane, 1,2-dibromo-4-(1,2-dibromoethyl)-cyclohexane, tetrabromocyclooctane, hexabromocyclooctane, hexabromocyclododecane, chloroparaffins, and analogous bromine- or chlorine- containing aliphatic or cycloaliphatic compounds. Most preferred in the practice of this invention is 1,2,5,6,9,10-hexabromocyclododecane, which is a commercially-available flame retardant.

Other thermally sensitive organic bromine-containing flame retardants that can be stabilized pursuant to this invention include the bis(2,3-dibromopropyl ether) of tetrabromobisphenol-A, and the bis(2,3-dibromopropyl ether) of tetrabromobisphenol-S. Both such flame retardants are available as articles of commerce. Both such flame retardants have bromine atoms substituted on aliphatic groups as well as bromine atoms substituted on an aromatic nucleus. The bromine substitution on the aliphatic groups is generally regarded to be the primary cause of the thermal instability of these flame retardants.

The exact chemical composition of the alkyltin mercaptoalkanoates, component (B), is not known with absolute certainty. However it is believed on the basis of available information that such compounds have two alkyl groups and at least one mercaptoalkanoate group bonded to an atom of tin. According to this hypothesis, the compounds may exist either as a cyclic compound, as a non-cyclic compound, or as a mixture of such compounds. The preferred alkyltin mercaptoalkanoates are those which are solids at room temperature as they have no adverse plasticizing effect upon the styrenic polymer compositions of this invention. However, for some applications liquid alkyltin mercaptoalkanoates can be used. Preferred solid materials that are available from commercial sources include, for example, Bärostab M36, which is described by its manufacturer as a butyltin mercaptopropionate, Bärostab OM36, which is described by the manufacturer as an octyltin mercaptopropionate, and equivalent materials. Products like Bärostab M36 have also been variously described by one manufacturer as a butyltin mercaptide, butyltin (3-mercaptopropionate), and dibutyltin (3-mercaptopropionate). It is indicated by that manufacturer to contain approximately 35% wt% of tin, and it melts at about 120-123°C. The manufacturer has also referred to Bärostab OM36 as an octyltin mercaptide, a dioctyltin thioester, and as octyltin mercaptopropionate, and has indicated that it contains approximately 26.5 wt% of tin. It is reasonable to expect that compounds of this type with other alkyl groups (*e.g.*, C₅₋₇, and C₉ and above) can be produced that exist as solids at room temperature. Compounds which are understood to be equivalent or suitably similar to Bärostab M36 from Bärlocher, are Tinstab BTS 261 from Akcros, Thermolite 35 from Atochem, and Prosper M36 or Okstan M36, from Comtin. The thermal decomposition temperature of Tinstab BTS 261 is reported to be 317°C.

Various zeolites, such as zeolite-A, zeolite-X, zeolite-Y, zeolite-P, and zeolite ZSM-5, or mixtures of any two or more of them, are suitable for use in the practice of this invention. Also suitable is mordenite. In all cases, the zeolite should be used in the form of a fine dry powder, free of lumps or clumps. From the cost-effectiveness standpoint zeolite-A is a preferred material. In a preferred embodiment, the selected zeolite is calcined before use in order to reduce its water content without materially disrupting its physical structure or average pore size. For example, zeolite-A typically contains about 18.5% water, and calcining can prove useful in reducing this water content, thereby increasing its usefulness in the compositions of this invention. Other zeolites such as zeolite-X which typically contains about 24% water, and zeolite-Y which has a typical water content of about 25% may also be improved for use in this invention by calcining them prior to use to reduce their water contents but without destroying their structure. An advantage of zeolite ZSM-5 is its normal low content of water, about 5%.

Vinylaromatic polymers used in the practice of this invention can be homopolymers, copolymers or block polymers and such polymers can be formed from such vinylaromatic monomers as styrene, ring-substituted styrenes in which the substituents are one or more C₁₋₆ alkyl groups and/or one or more halogen atoms, such as chlorine or bromine atoms, alphamethylstyrene, ring-substituted alpha-methylstyrenes in which the substituents are one or more C₁₋₆ alkyl groups and/or one or more halogen atoms, such as chlorine or bromine atoms, vinylnaphthalene, and similar polymerizable styrenic monomers -- i.e., styrenic compounds capable of being polymerized by means of peroxide or like catalysts into thermoplastic resins. Homopolymers and copolymers of simple styrenic monomers (e.g., styrene, p-methyl-styrene, 2,4-dimethylstyrene, alpha-methyl-styrene, p-chloro-styrene, etc.) are preferred from the standpoints of cost and availability.

Impact-modified polystyrenes (IPS) that are preferably used may be medium-impact polystyrene (MIPS), high-impact polystyrene (HIPS), or blends of HIPS and GPPS (sometimes referred to as crystal polystyrene). These are all conventional materials. The rubber used in effecting impact modification is most often, but need not be, a butadiene rubber. High-impact polystyrene or blends containing a major amount (greater than 50 wt%) of high-impact polystyrene together with a minor amount (less than 50 wt%) of crystal polystyrene are particularly preferred as the substrate or host polymer.

The flame retardant amount of brominated flame retardant component used is dependent upon the compound selected, the base resin involved, the performance level desired, the thickness of the molded part, cost considerations, whether or not the thermoplastic formulation contains a flame retardant synergist, *e.g.* Sb₂O₃, or sodium antimonate (Na₂Sb₂O₆), whether or not the article formed from the thermoplastic formulation is expanded or not, and any adverse effect that the compound may have on the physical properties of the thermoplastic formulation. Generally, an empirical approach is relied upon in the art for determining the flame retardant amount which best suits the particular needs for the intended usage of the end product. If the thermoplastic formulation is for use in forming a non-expanded article, typically a suitable flame retardant amount is within the range of from 1 to 5 weight percent of an additive composition of this invention. If pursuant to embodiments of this invention where the polymer is a vinyl aromatic polymer such as crystal or rubber-modified polystyrene and no flame retardant synergist is used, an amount of the additive composition within the range of from 2 to 4 weight percent is typically used.

When the thermoplastic formulation is suitable for and is used to produce expanded, i.e., foamed articles, from a vinyl aromatic polymer, the brominated cycloaliphatic compound can provide flame retardation when used in an amount within the range of from 1.5 to 4 weight percent.

It will be appreciated that the proportions given herein for the specified components, although typical, are nonetheless approximate, as departures from one or more of the foregoing ranges are permissible whenever deemed necessary, appropriate or desirable in any given situation in order to achieve the desired flame retardancy (*e.g.,* passing with at least a UL V-2 rating or passing the glow wire test) and thermal stability, while retaining the other physical properties required for the intended use of the finished composition. Thus to achieve the optimum combination of flame retardancy, thermal stability, and other properties, a few preliminary tests with the materials to be used is usually a desirable way to proceed in any given situation.

The vinylaromatic polymer compositions and the polypropylene polymer compositions of this invention can be prepared by use of conventional blending equipment such as a twin-screw extruder, a Brabender mixer, or similar apparatus. As noted above, it is possible to add the several components of the flame retardant compositions of this invention to the base polymer individually or in any combinations. Preferably, however, a preformed additive composition of this invention is blended with the base vinylaromatic or polypropylene resin.

Conventional molding procedures, such as injection molding, extrusion, or like known procedures can be performed on the thermoplastic vinylaromatic and polypropylene formulations of this invention in producing finished articles therefrom. The articles so formed will not show significant color and viscosity degradation often experienced when using such techniques on GPPS or IPS which has been flame retarded with a brominated cycloaliphatic flame retardant. Similarly, the thermal degradation of polyolefins such as polypropylene, which typically results in viscosity degradation, is substantially reduced or eliminated when maintaining the polyolefin flame retarded with the bis(2,3-dibromopropyl ether) of tetrabromobisphenol-A, or the bis(2,3-dibromopropyl ether) of tetrabromobisphenol-S at elevated temperatures during processing.

The compositions of this invention may contain, but need not contain, other conventional additives such as, for example, antioxidants, metal scavengers or deactivators, pigments, fillers, dyes, anti-static agents, processing aids, and other additional thermal stabilizers. Any additive which would materially detract from one or more of the advantageous performance properties of the composition of this invention when devoid of such additive, should not be included in the composition.

The additive compositions of this invention are of particular advantage for use in high-impact polystyrene for such applications as manufacture of electrical equipment and business equipment housings.

The following examples illustrate the practice and features of this invention. These examples are not intended to limit, and should not be construed as limiting, the scope of the invention.

### EXAMPLE 1

A flame retardant additive composition of this invention was prepared by forming a dry powder blend of 1,2,5,6,9,10-hexabromocyclododecane, dibutyltin 3-mercaptopropionate), and zeolite-A in weight proportions of 93:2:5, respectively. The resultant additive was a white powder containing 69% bromine. It had a packed bulk density of 134 g/100 mL and an aerated bulk density of 121 g/100 mL. Its specific gravity, as determined by ASTM D 792-91 was 2.19. Differential scanning calorimetry showed that the onset of melting of the additive formulation commenced at 183°C.

### EXAMPLE 2

A sample of the additive of Example 1 was subjected to thermogravimetric analysis under a nitrogen atmosphere using temperature increases of 10°C per minute over the temperature range of 30°C to 400°C. The additive showed a 5 percent weight loss at 248°C, a 10 percent weight loss at 262°C and a 50 percent weight loss at 274°C.

### EXAMPLE 3

A blend was formed composed of 67.7 wt% of high-impact polystyrene (Dow Styron 485-7), 29.0 wt% of crystal polystyrene (Dow Styron 678), and 3.3 wt% of the additive composition of Example 1. This blend was processed in a Werner and Pfleiderer ZSK 25 twin-screw extruder operated at a screw speed of 200 rpm, with an output of 25 kg/hour, and barrel temperatures ranging from 180°C to 210°C along the length of the barrel, which resulted in a melt temperature of about 210°C. The processed material was then injection molded to form specimens of 1.6 millimeter and 2 millimeter thickness using a Demag ErgoTech 50-200 injection molding machine operated with a mold temperature of 45°C, a screw speed of 100 rpm and barrel temperatures ranging from an initial zone of one-fourth the barrel length at 175°C and the remaining three-fourths of the barrel length being at 210°C, resulting in a melt temperature of about 210°C. These samples passed the IEC 695-2-1/2 Glow Wire test at 960°C. The concentration of 3.3 weight percent is a significantly lower additive level than the amount required using a commercially-available hexabromocyclododecane flame retardant formulation designed for the same end use applications.

### EXAMPLE 4

Test specimens formed in Example 3 were also subjected to the UL-94 test procedure. It was found that the samples passed the UL-94 V-2 test.

### EXAMPLE 5

The same procedure and materials as in Example 3 were used in a series of dynamic injection molding tests conducted under even more severe operating conditions. Four such tests were conducted each under progressively more stringent thermal conditions. Thus in a first run, the temperature of the first one-fourth of the barrel of the injection molding machine was 185°C and the remainder of the barrel was held at 220°C so that the melt was molded at about 220°C. In the second run, these temperatures were 190°C and 230°C, respectively. The third run employed temperatures of 200 and 240°C, respectively. In the final run, these temperatures were increased to 200 ° C and 250 ° C, respectively. Thus, the melt temperatures in these molding operations were ca. 220°C, 230°C, 240°C, and 250°C, respectively. The molded specimens were color plaques of 1.6 millimeter thickness. For comparative purposes the same polystyrene blend was treated with the same amount of a commercially-available flame retardant additive formulation designed for the same end use applications. Measured L* values at each temperature showed that the compositions prepared with the additive compositions of this invention were whiter than those prepared with the commercially-available stabilized hexabromocyclododecane at 250°C.

Another embodiment is a polyolefin, preferably polypropylene, with which has been blended a flame retardant quantity of (A) at least one organic bromine flame retardant compound having a plurality of bromine atoms directly bonded to a cycloaliphatic ring, (B) an alkyltin mercaptoalkanoate, (C) a zeolite adjuvant, and (D) a flame retardant synergist, preferably antimony trioxide. Such compositions are formulated to pass the UL94 V2 test, and preferred compositions of this type can also pass the Glow Wire test at least at one temperature in the range of 750°C to 960°C, and most preferably at 960°C. Components (A), (B), and (C) are proportioned as described above. Amounts of 2 to 10 wt% and preferably 2.5 to 5 wt%, of (A) are used in the polyolefin, and the content of synergist is typically 0.3 to 6 wt%, and preferably 0.4 to 5 wt%. As an example, molded test specimens formed from a blend composed of 96 wt% polypropylene (Moplen KY6100), 3 wt% of an additive composed of (A) hexabromocyclododecane, (B) a finely-divided solid butyltin mercaptopropionate, and (C) finely-divided zeolite-A in proportions of 93:2:5, respectively, and 1 wt% of antimony trioxide gave a UL94 V2 rating, passed the Glow Wire test at 960°C, and had excellent mechanical properties (*e.g.*, improved impact strength, improved flow, and improved tensile properties).

Departures may be made from the proportions of the ingredients set forth hereinabove, provided such departures do not materially affect the performance of the composition in an adverse manner.

Components referred to herein by chemical name or formula, whether referred to in the singular or plural, are identified as they exist prior to coming into contact with another substance referred to by chemical name or chemical type (*e.g.,* another component, a solvent, or a polymer). Also, even though the claims hereinafter may refer to substances, components and/or ingredients in the present tense (*e.g.,* "comprises" or "is"), the reference is to the substance, component or ingredient as it existed at the time just before it was first contacted, blended or mixed with one or more other substances, components and/or ingredients in accordance with the present disclosure.

## Claims

1. A flame retardant additive composition having enhanced thermal stability which comprises a blend formed from (A) at least one organic bromine flame retardant selected from (i) a flame retardant compound having a plurality of bromine atoms directly bonded to a cycloaliphatic ring, (ii) the bis(2,3-dibromopropyl ether) of tetrabromobisphenol-A, and (iii) the bis(2,3-dibromopropyl ether) of tetrabromobisphenol-S, (B) an alkyltin mercaptoalkanoate, and (C) a zeolite adjuvant, in proportions of 0.01 to 0.08 part by weight of (B) per part by weight of (A), and 0.01 to 0.35 part by weight of (C) per part by weight of (A).

2. An additive composition of claim 1 wherein said proportions are 0.01 to 0.05 part by weight of (B) per part by weight of (A), and 0.01 to 0.2 part by weight of (C) per part by weight of (A).

3. An additive composition of claim 1 or 2 wherein (A) is a flame retardant compound having a plurality of bromine atoms directly bonded to a cycloaliphatic ring.

4. An additive composition of claim 3 wherein said flame retardant compound is hexabromocyclododecane.

5. An additive composition of claim 1 or 2 wherein (A) is the bis(2,3-dibromopropyl ether) of tetrabromobisphenol-A.

6. An additive composition of claim 1 or 2 wherein (A) is the bis(2,3-dibromopropyl ether) of tetrabromobisphenol-S.

7. An additive composition of any of claims 1-6 wherein the composition does not contain antimony oxide or silica.

8. An additive composition of any of claims 1-7 wherein (B) is an alkyltin mercaptoalkanoate that is a solid at room temperature.

9. An additive composition of claim 8 wherein said alkyltin mercaptoalkanoate is a butyltin mercaptopropionate.

10. An additive composition of claim 8 wherein said alkyltin mercaptoalkanoate is an octyltin mercaptopropionate.

11. An additive composition of any of claims 1-10 wherein (iii) is zeolite-A.

12. An additive composition of claim 11 wherein the zeolite-A has been calcined to reduce its water content.

13. An additive composition of any of claims 1-10 wherein (iii) is zeolite ZSM-5.

14. An additive composition of claim 1 comprising a blend of (A) hexabromocyclododecane, (B) an alkyltin mercaptopropionate that is a solid at room temperature, and (C) a finely-divided zeolite in proportions of 0.01 to 0.05 part by weight of (B), and 0.01 to 0.20 part by weight of (C), per part by weight of (A).

15. An additive composition of claim 1 wherein (B) is a finely-divided solid butyltin mercaptopropionate and wherein the proportions of (A):(B):(C) are essentially 93:2:5.

16. An additive composition of claim 15 wherein (C) is finely-divided zeolite-A.

17. A composition comprising a vinylaromatic polymer or a polyolefin polymer with which has been blended a flame retardant quantity of a flame retardant additive composition of any of claims 1-16, the components (A), (B), and (C) of said additive composition having been blended with the polymer as a preformed blend thereof and/or individually and/or in any subcombination(s) or blend(s) of any two or more of such components such that the proportions of said components relative to each other are as specified.

18. A composition of claim 17 wherein the polymer is a high-impact polystyrene polymer or a crystal polystyrene polymer, or a blend thereof, wherein (A) is a compound having a plurality of bromine atoms directly bonded to a cycloaliphatic ring, and wherein the composition is characterized by the capability of forming molded specimens of 1.6 and 3.2 millimeter thickness that pass the IEC 695-2-1/2 Glow Wire test at least at one temperature in the range of 750°C to 960°C.

19. A composition of claim 18 wherein (A) is hexabromocyclododecane.

20. A composition of any of claims 17-19 characterized by the capability of forming molded specimens of 1.6 and 3.2 millimeter thickness that pass the UL94 V2 test.

21. A molded or extruded article formed from a composition of any of claims 17-20.

22. A method of producing a flame-retarded article which comprises molding or extruding at a temperature of up to 250°C a melt blend of a composition of any of claims 17-20.

23. A composition of claim 17 wherein the polymer is a polyolefin polymer, and wherein (A) is the bis(2,3-dibromopropyl ether) of tetrabromobisphenol-A or the bis(2,3-dibromopropyl ether) of tetrabromobisphenol-S.

24. A composition of claim 23 wherein the polymer is a polypropylene polymer.

25. A molded or extruded article formed from a composition of claim 23 or 24.

26. A composition of claim 17 wherein the polymer is a polyolefin polymer, wherein (A) is hexabromocyclododecane, and wherein said composition additionally comprises at least one flame retardant synergist.

27. A composition of claim 26 wherein the polymer is a polypropylene polymer, and wherein said synergist is antimony trioxide.

28. A molded or extruded article formed from a composition of claim 26 or 27.
